# EUROPEAN PATENT APPLICATION

(11) **EP 3 982 252 A1**
(43) Date of publication of application: **13.04.2022**
(21) Application number: 20200584.9
(22) Date of filing: 07.10.2020
(51) Int. Cl.: G06F 8/65, G06F 21/57, G06F 21/64

(54) **METHOD OF AND APPARATUS FOR PROVIDING A SOFTWARE UPDATE TO A DEVICE**

(71) Applicant: Robert Bosch GmbH, 70442 Stuttgart (DE)
(72) Inventor: Rudic, Radosav, 22762 Lund (SE)

(57) **Abstract**

A method, for example computer implemented method, of providing a software update to a device for an automotive system, e.g. for a vehicle, the method comprising: signing an update manifest which comprises a first information related to at least one artifact of the software update, transmitting the signed update manifest to the device, transmitting the at least one artifact to the device.

## Description

### Field of the Invention

Exemplary embodiments relate to a method of providing a software update to a device.

Further exemplary embodiments relate to an apparatus for providing a software update to a device.

### Summary

Exemplary embodiments relate to a method, for example a computer implemented method, of providing a software update to a device for an automotive system, e.g. for a vehicle, the method comprising: signing an update manifest which comprises a first information related to at least one artifact of the software update, transmitting the signed update manifest to the device, transmitting the at least one artifact to the device.

According to further exemplary embodiments, the device for the automotive system may e.g. comprise or represent an electric or electronic control unit, e.g. comprising an embedded system.

According to further exemplary embodiments, the at least one artifact comprises one or more elements that should be deployed on the device in the course of the software update, wherein for example the one or more elements comprise at least one of: data files, executable files, binary files.

According to further exemplary embodiments, the first information comprises a hash value and/or a checksum of the at least one artifact.

According to further exemplary embodiments, the method further comprises: transmitting a command to the device instructing the device to perform a software update process based on the signed update manifest and the one or more artifacts.

Further exemplary embodiments relate to an apparatus for performing the method according to the embodiments.

Further exemplary embodiments relate to a method, for example computer implemented method, of receiving data for a software update for a device for an automotive system, e.g. for a vehicle, the method comprising: receiving a signed update manifest which comprises a first information related to at least one artifact of the software update, verifying a signature of the signed update manifest, and performing the software update based on the verification of the signature.

According to further exemplary embodiments, the method further comprises at least one of: a) if the verification is positive, performing the software update based on the signed update manifest, b) if the verification is negative, not performing the software update.

According to further exemplary embodiments, the method further comprises: receiving the at least one artifact, at least temporarily storing the received artifact, checking a hash value and/or checksum of the received artifact.

According to further exemplary embodiments, the checking comprises: determining the hash value and/or checksum of the received artifact, comparing the determined hash value and/or checksum of the received artifact with an associated hash value and/or checksum for the received artifact as provided in the signed update manifest.

Further exemplary embodiments relate to an apparatus for performing the method according to the embodiments. In some embodiments, the apparatus and/or its functionality may e.g. be included in an ECU for a vehicle such as a passenger car or truck.

Further exemplary embodiments relate to a computer program comprising instructions which, when the program is executed by a computer, cause the computer to carry out the method according to the embodiments.

Further exemplary embodiments relate to a computer-readable storage medium comprising instructions which, when executed by a computer, cause the computer to carry out the method according to the embodiments.

Further exemplary embodiments relate to a data carrier signal carrying and/or characterizing the computer program according to the embodiments.

Further exemplary embodiments relate to a system comprising at least one apparatus according to the embodiments.

Further exemplary embodiments relate to use of the method according to the embodiments and/or of the apparatus according to the embodiments and/or of the computer program according to the embodiments and/or of the computer-readable storage medium according to the embodiments and/or of a representation of the data carrier signal according to the embodiments and/or of the system according to the embodiments for at least one of: a) providing a software update to a device for an automotive system, for example to an electric control unit for a vehicle, b) streaming one or more artifacts of the software update to the device, c) checking components associated with a software update, for example for authenticity and/or integrity.

### Brief description of the figures

Some exemplary embodiments will now be described with reference to the accompanying drawings, in which:
- Fig. 1: schematically depicts a simplified block diagram according to exemplary embodiments,
- Fig. 2: schematically depicts a simplified flow-chart of a method according to further exemplary embodiments,
- Fig. 3: schematically depicts a simplified block diagram according to further exemplary embodiments,
- Fig. 4: schematically depicts a simplified block diagram according to further exemplary embodiments,
- Fig. 5: schematically depicts a simplified block diagram according to further exemplary embodiments,
- Fig. 6A: schematically depicts a simplified flow-chart of a method according to further exemplary embodiments,
- Fig. 6B: schematically depicts a simplified flow-chart of a method according to further exemplary embodiments,
- Fig. 6C: schematically depicts a simplified flow-chart of a method according to further exemplary embodiments,
- Fig. 6D: schematically depicts a simplified flow-chart of a method according to further exemplary embodiments,
- Fig. 7: schematically depicts a simplified flow-chart according to further exemplary embodiments,
- Fig. 8: schematically depicts a simplified block diagram according to further exemplary embodiments,
- Fig. 9: schematically depicts aspects of use according to further exemplary embodiments.

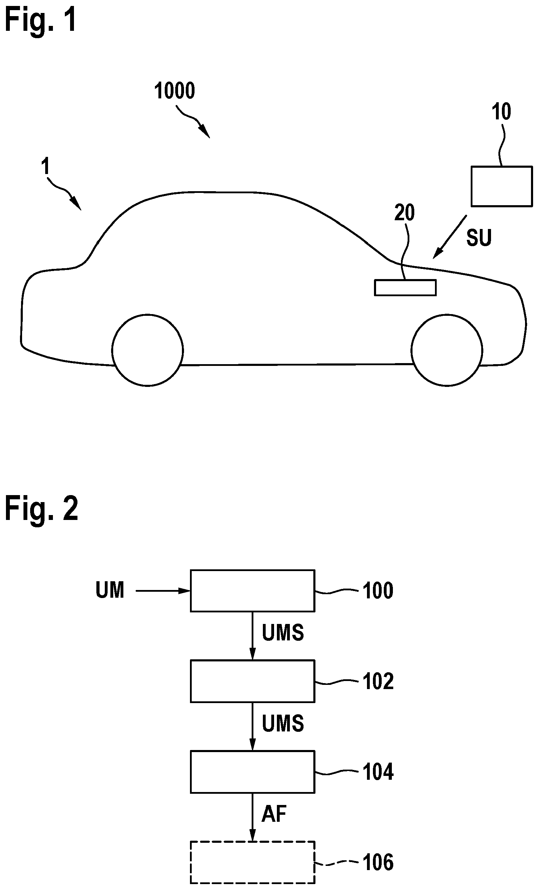

Fig. 1 schematically depicts a simplified block diagram of a system 1000 according to exemplary embodiments. The system 1000 comprises an apparatus 10 for providing a software update SU to a device 20 for an automotive system, e.g. for a vehicle 1.

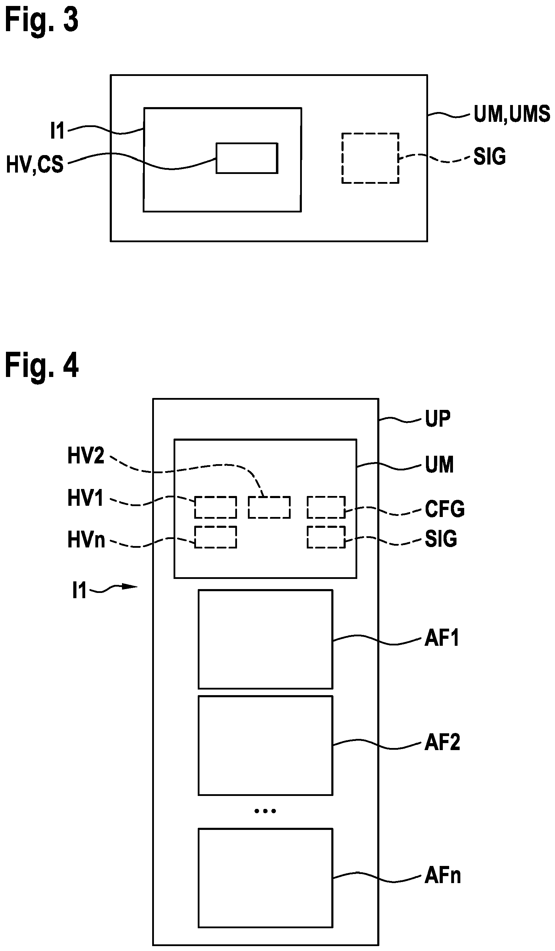

Further exemplary embodiments, Fig. 2, 3, relate to a method, for example a computer implemented method, of providing a software update SU to a device 20 for an automotive system, e.g. for a vehicle 1, the method comprising: signing 100 (Fig. 2) an update manifest UM (Fig. 3) which comprises a first information I1 related to at least one artifact (not shown in Fig. 2, 3, cf. e.g. Fig. 4) of the software update SU, wherein a signed update manifest UMS is obtained, transmitting 102 the signed update manifest UMS to the device 20 (Fig. 1), transmitting 104 (Fig. 2) the at least one artifact AF to the device 20.

According to further exemplary embodiments, the device 20 for the automotive system may e.g. comprise or represent an electric or electronic control unit 20, e.g. comprising an embedded system.

According to further exemplary embodiments, the at least one artifact AF comprises one or more elements that should be deployed on the device 20 in the course of the software update SU, wherein for example the one or more elements comprise at least one of: data files, executable files, binary files.

According to further exemplary embodiments, cf. Fig. 3, the first information I1 comprises a hash value HV and/or a checksum CS of the at least one artifact AF. This enables e.g. the device 20 to check the received artifact(s), e.g. to detect manipulations and/or errors, which may e.g. be caused during a transmission of the artifact(s) to the device 20.

Fig. 3 also exemplarily depicts the signature SIG of the update manifest UM. In other words, the signed update manifest USM may basically correspond with the (unsigned) update manifest UM (Fig. 2), with the exception that the signed update manifest USM also comprises the signature SIG.

According to further exemplary embodiments, Fig. 2, the method further comprises: transmitting 106 a command to the device 20 (Fig. 1) instructing the device 20 to perform a software update process based on the signed update manifest UMS and the one or more artifacts AF.

Further exemplary embodiments relate to an apparatus 10 (Fig. 1) for performing the method according to the embodiments.

Fig. 4 schematically depicts a simplified block diagram according to further exemplary embodiments. Depicted is an update packet UP which may e.g. comprise the update manifest UM, optionally with its associated signature SIG, (hence, in some embodiments, the update packet UP may comprise the signed update manifest UMS). In further embodiments, the (signed) update manifest UM(, UMS) may also comprise configuration information CFG which may e.g. comprise at least one instruction file characterizing aspects of the update packet UP and/or of a software update process that may be performed using the update packet UP.

In some exemplary embodiments, the update manifest UM, e.g. the configuration information CFG, may carry information about at least one of: preconditions, dependencies and operations, that may e.g. be performed by the device 20, e.g. to enable that new artifacts AF can be deployed on the device 20 in safe (e.g., under aspects of functional safety) and/or secure (e.g., under aspects of security against e.g. cryptographic attacks and the like) way.

In some exemplary embodiments, the update packet UP also comprises the first information I1 which may e.g. comprise hash values HV1, HV2, .., HVn for associated artifacts AF1, AF2, .., AFn.

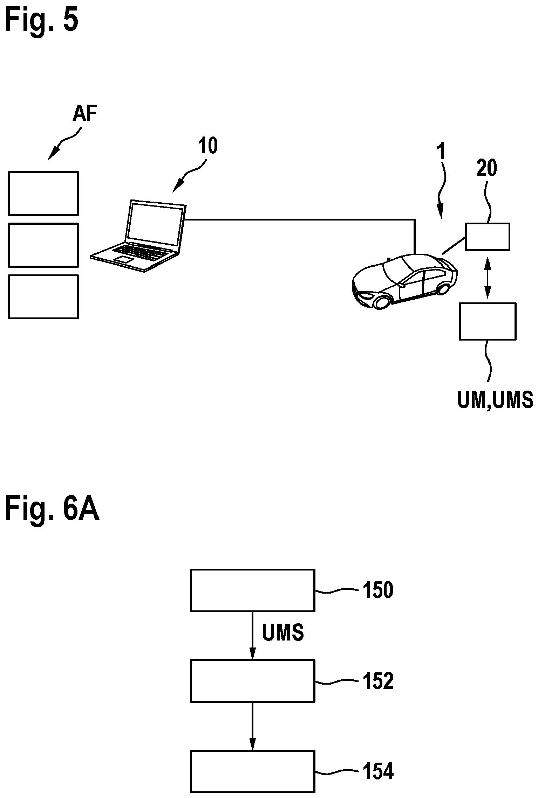

Fig. 5 schematically depicts a simplified block diagram according to further exemplary embodiments. An apparatus 10 transmits a plurality AF of artifacts to a vehicle 1, which may e.g. comprise the device 20 (Fig. 1) according to the embodiments. Using the (signed) update manifest UM(, UMS), the device 20 may e.g. check the artifacts AF received from the device 10 prior to performing the software update based thereon.

Further exemplary embodiments, Fig. 6A, relate to a method, for example a computer implemented method, of receiving data for a software update SU for a device 20 for an automotive system, e.g. for a vehicle 1, the method comprising: receiving 150 (Fig. 6A) a signed update manifest UMS which comprises a first information I1 (Fig. 3, 4) related to at least one artifact AF, AF-1, .. of the software update SU, verifying 152 a signature SIG (Fig. 3) of the signed update manifest UMS, and performing 154 the software update SU based on the verification 152 of the signature SIG. This e.g. ensures that the software update SU is only performed if the signed update manifest UMS has not been manipulated.

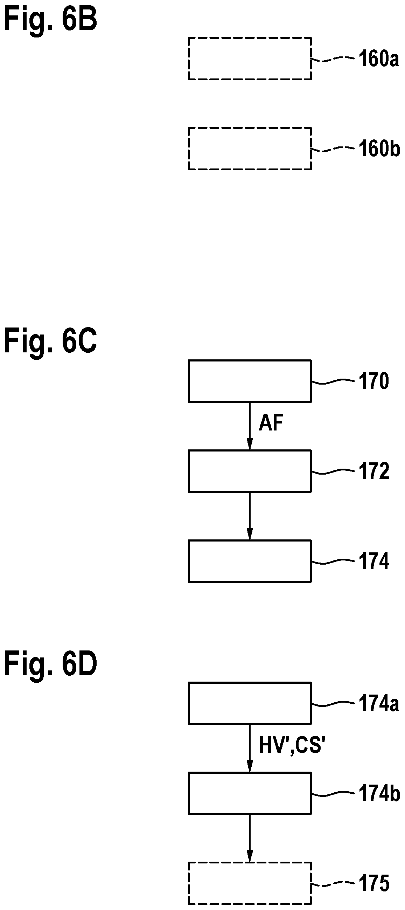

According to further exemplary embodiments, Fig. 6B, the method further comprises at least one of: a) if the verification 152 is positive, performing 160a the software update SU based on the signed update manifest UMS, b) if the verification 152 is negative, not performing 160b the software update SU.

According to further exemplary embodiments, Fig. 6C, the method further comprises: receiving 170 the at least one artifact AF, at least temporarily storing 172 the received artifact (thus e.g. obtaining a received artifact), checking 174 a hash value and/or checksum of the received artifact. This way it can be determined e.g. by the device 20 (Fig. 1) whether a single artifact has been manipulated or is corrupted.

According to further exemplary embodiments, Fig. 6D, the checking comprises: determining 174a the hash value HV' and/or checksum CS' of the received artifact, comparing 174b the determined hash value HV' and/or checksum CS' of the received artifact with an associated hash value HV and/or checksum CS for the received artifact as provided in the signed update manifest UMS (Fig. 3, 4). Optionally, in some embodiments, the method may comprise reporting 175 the failed software update.

Further exemplary embodiments relate to an apparatus 20 (Fig. 1) for performing the method according to the embodiments. In some embodiments, the apparatus 20 and/or its functionality may e.g. be included in an ECU for a vehicle 1 such as a passenger car 1 or truck.

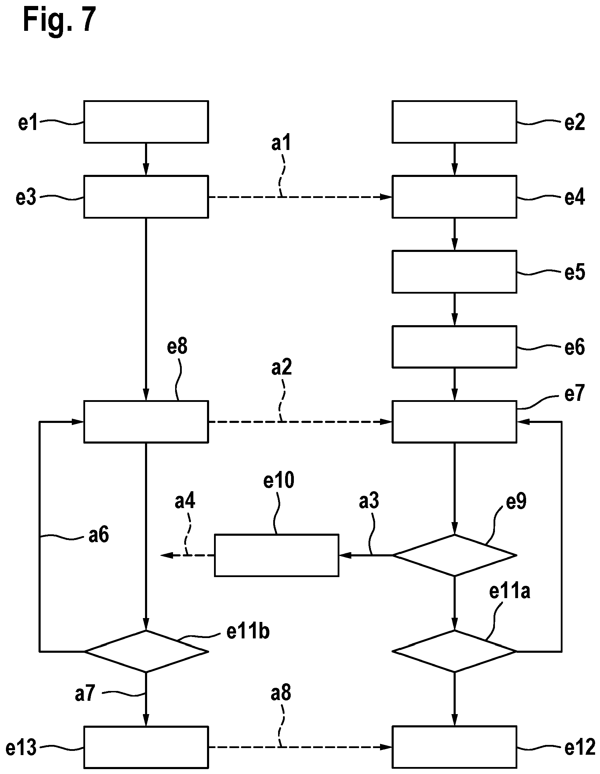

Fig. 7 schematically depicts a simplified flow-chart according to further exemplary embodiments. Element e1 symbolizes a start of an exemplary software update sequence according to some embodiments, e.g. at the device 10. Element e2 symbolizes a start of an exemplary software update sequence according to some embodiments, e.g. at the device 20. Element e3 symbolizes a transmission of a signed update manifest UMS (e.g., similar to block 102 of Fig. 2), also see arrow a1, e.g. to the device 20, and element e4 symbolizes a receipt of the signed update manifest UMS, e.g. by the device 20. Element e5 symbolizes a verification of the received signed update manifest UMS. Element e6 symbolizes the device 20 performing operations, e.g. based on the configuration information CFG (Fig. 4). Element e7 symbolizes the device 20 receiving an artifact for the update, e.g. as transmitted by device 10, cf. block e8 and arrow a2 of Fig. 7. Element e9 symbolizes the device 20 checking e.g. the hash value HV' of a received artifact, e.g. with respect to a corresponding hash value HV as comprised in the signed update manifest UMS (Fig. 4). If the check e9 is negative, e.g. the hash values HV', HV are not identical, device 20 branches, see arrow a3, to element e10, which e.g. comprises reporting a failed update process, e.g. based on the check e9. In some embodiments, a corresponding error a4 may be signaled e.g. to the device 10 and/or another, e.g. further, device (not shown).

If the check e9 is positive, the method proceeds a5 with element e11a, which symbolizes an optional repetition of blocks e7, e9, e.g. depending on a number of artifacts associated with the signed update manifest UMS, also cf. elements e11b, a6 symbolizing a transmission of the further artifacts on the "transmitter" side. If all artifacts have been transmitted, cf. element e11b, the method proceeds a7 to element e12, 13, wherein element e12 indicates that the device 20 sets all received artifacts in function, and wherein element e13 symbolizes that the device 10 activates the artifacts, also see arrow a8, e.g. by signaling to the device 20 that it may perform the software update procedure.

In some embodiments, the verification e5 may be triggered by the device 10. In some embodiments, the verification e5 may alternatively and/or additionally be triggered by the apparatus 20, e.g. internally in the apparatus 20.

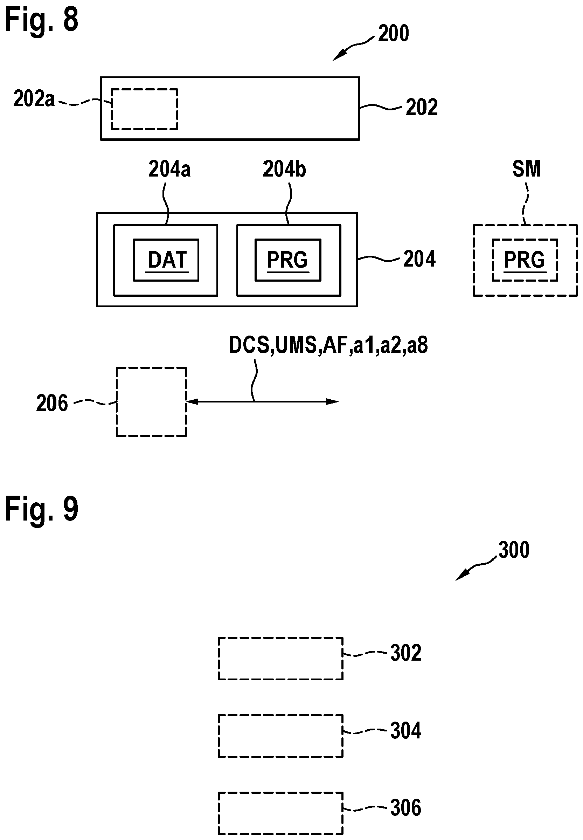

Fig. 8 schematically depicts a configuration 200 comprising a calculating unit 202 e.g. comprising at least one core 202a for executing a computer program PRG or at least parts thereof, e.g. for executing the method according to the embodiments or at least one or more steps thereof. In some embodiments, the device 10 may comprise the configuration 200 as explained further below with reference to Fig. 8. In some embodiments, the device 20 may comprise the configuration 200, too.

According to exemplary embodiments, the at least one calculating unit 202 may comprise and/or represent at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). According to further preferred embodiments, any combination of two or more of these elements is also possible.

According to further exemplary embodiments, a memory unit 204 accessible by the calculating unit 202 may be provided. According to further embodiments, the memory unit 204 may comprise at least one of the following elements: a volatile memory 204a, particularly a random-access memory (RAM), a non-volatile memory 204b, particularly a Flash-EEPROM. Preferably, said computer program PRG is at least temporarily stored in said non-volatile memory 204b. Data DAT, which may e.g. be used for executing the method according to the embodiments, may at least temporarily be stored in said RAM 204a.

According to further embodiments, an optional computer-readable storage medium SM comprising instructions, e.g. in the form of a computer program PRG, may be provided. As an example, said storage medium SM may comprise or represent a digital storage medium such as a semiconductor memory device (e.g., solid state drive, SSD) and/or a magnetic storage medium such as a disk or hard disk drive (HDD) and/or an optical storage medium such as a compact disc (CD) or DVD (digital versatile disc) or the like.

According to further preferred embodiments, the apparatus 200 may comprise an optional data interface 206, preferably for bidirectional data exchange with a further device (not shown). As an example, by means of said data interface 206, a data carrier signal DCS may be received, e.g. from said external device, for example via a wired or a wireless data transmission medium, e.g. over a (virtual) private computer network and/or a public computer network such as e.g. the Internet. According to further preferred embodiments, the data carrier signal DCS may represent or carry the computer program PRG according to the embodiments, or at least a part thereof.

In further embodiments, the data interface 206 may also be used to exchange at least one of: a) the signed update manifest UMS, b) at least one artifact AF, c) signaling and/or data as e.g. exemplarily depicted by elements a1, a2, a8 of Fig. 7.

Further exemplary embodiments relate to a computer program PRG comprising instructions which, when the program is executed by a computer 202, cause the computer 202 to carry out the method according to the embodiments, e.g. according to Fig. 2 and/or Fig. 6A et seq..

Further exemplary embodiments, Fig. 9, relate to a use 300 of the method according to the embodiments and/or of the apparatus according to the embodiments and/or of the computer program according to the embodiments and/or of the computer-readable storage medium according to the embodiments and/or of a representation of the data carrier signal according to the embodiments and/or of the system according to the embodiments for at least one of: a) providing 302 a software update SU to a device 20 for an automotive system, for example to an electric control unit 20 for a vehicle 1, b) streaming a2 one or more artifacts AF of the software update SU to the device 20, c) checking components SIG, AF associated with a software update SU, for example for authenticity and/or integrity.

According to further exemplary embodiments, an update process of the automotive system 20 can be performed in a secure manner using the principle according to the embodiments. In some embodiments, an update packet UP (Fig. 4) carries, for example all, information UM, AF1, AF2, .., AFn usable and/or needed for a new software to be deployed on the system 20. In some embodiments, the update packet UP comes from a trusted source (e.g., manufacturer and/or repair shop), may be authenticated and/or authorized and is consistent (e.g., data AF1, AF2, .. in the update packet up has integrity).

In some embodiments, the signing 100 (Fig. 2) of the update manifest UM is performed, wherein the update manifest UM includes the hash values HV1, HV2, .., HVn of artifacts AF1, AF2, .., AFn contained in the update packet UP. In this way, the update streaming process a1, a2 (Fig. 7) may e.g. first transfer the signed update manifest UMS, then the system 20 can check authenticity and/or consistency, e.g. based on the signature SIG of the signed update manifest UMS, e.g. by verifying the manifest's UMS signature SIG. In some embodiments, if the manifest's UMS verification is successful, the system 20 can perform all specified checks and operations, cf. e.g. element e6 of Fig. 7, so changes of the system 20 can take place. In some embodiments, the system 20 can be prepared for installation of artifacts even the artifacts are not (yet) stored on it.

In some embodiments, the artifacts AF are received in multiple transfer instances ("packets"), and may e.g. be written on precise locations defined by the system needs, e.g. at specific addresses of the memory unit 204 of the device 20. The memory locations can e.g. be predefined (e.g., statically defined in the system) or defined in the update manifest UM, e.g. via the configuration information CFG.

In some embodiments, after writing at least one artifact on the system's location 204, the system 20 may check the hash value (and/or checksum value) of the written artifact against the hash (checksum) value written in update manifest UM, UMS. As mentioned above, in some embodiments, if the hash (checksum) value is not equal to one defined in the update manifest, the system 20 may delete already received artifacts. In some embodiments, they will not be used, e.g. not be run by the system 20, and the system 20 may report an error (cf. e.g. element e10 of Fig. 7) on the current update process. This way, by signing artifacts' hash values listed in the update manifest, e.g. together with the complete update manifest UM, the signature SIG is spread over the artifacts contained therein.

In further embodiments, the hash value HV and/or checksum value CS may be provided with an additional signature, too, which may e.g. be checked by the device 20 similar to the above explained procedure.

## Claims

1. A method, for example computer implemented method, of providing a software update (SU) to a device (20) for an automotive system (1), e.g. for a vehicle (1), the method comprising: signing (100) an update manifest (UM) which comprises a first information (11) related to at least one artifact (AF) of the software update (SU), transmitting (102) the signed update manifest (UMS) to the device (20), transmitting the at least one artifact (AF) to the device (20).

2. The method according to claim 1, wherein the at least one artifact (AF) comprises one or more elements that should be deployed on the device (20) in the course of the software update (SU), wherein for example the one or more elements comprise at least one of: data files, executable files, binary files.

3. The method according to at least one of the preceding claims, wherein the first information (11) comprises a hash value (HV) and/or a checksum (CS) of the at least one artifact.

4. The method according to at least one of the preceding claims, further comprising: transmitting (106) a command (a8) to the device (20) instructing the device (20) to perform a software update process based on the signed update manifest (UMS) and the one or more artifacts (AF).

5. An apparatus (10) for performing the method according to at least one of the preceding claims.

6. A method, for example computer implemented method, of receiving data for a software update (SU) for a device (20) for an automotive system (1), e.g. for a vehicle (1), the method comprising: receiving (150) a signed update manifest (UMS) which comprises a first information (11) related to at least one artifact (AF) of the software update (SU), verifying (152) a signature (SIG) of the signed update manifest (UMS), and performing (154) the software update (SU) based on the verification (152) of the signature (SIG).

7. The method according to claim 6, further comprising at least one of: a) if the verification (152) is positive, performing (160a) the software update (SU) based on the signed update manifest (UMS), b) if the verification (152) is negative, not performing (160b) the software update (SU).

8. The method according to at least one of the claims 6 to 7, further comprising: receiving (170) the at least one artifact (AF), at least temporarily storing (172) the received artifact (AF), checking (174) a hash value (HV) and/or checksum of the received artifact (AF).

9. The method according to claim 8, wherein the checking (174) comprises: determining (174a) the hash value (HV') and/or checksum (CS') of the received artifact (AF), comparing (174b) the determined hash value (HV') and/or checksum (CS') of the received artifact (AF) with an associated hash value (HV) and/or checksum (CS) for the received artifact (AF) as provided in the signed update manifest (UMS).

10. An apparatus (20) for performing the method according to at least one of the preceding claims.

11. A computer program (PRG) comprising instructions which, when the program (PRG) is executed by a computer (202), cause the computer (202) to carry out the method according to at least one of the claims 1 to 4 and/or 6 to 8.

12. A computer-readable storage medium (SM) comprising instructions (PRG) which, when executed by a computer (202), cause the computer (202) to carry out the method according to at least one of the claims 1 to 4 and/or 6 to 8.

13. A data carrier signal (DCS) carrying and/or characterizing the computer program (PRG) of claim 11.

14. A system (1000) comprising at least one apparatus (10) according to claim 5 and/or at least one apparatus (20) according to claim 10.

15. Use (300) of the method according to at least one of the claims 1 to 4 and/or 6 to 8 and/or of the apparatus (10, 20) according to claim 5 and/or 10 and/or of the computer program (PRG) according to claim 11 and/or of the computer-readable storage medium (SM) according to claim 12 and/or of a representation of the data carrier signal (DCS) according to claim 13 and/or of the system (1000) according to claim 14 for at least one of: a) providing a software update (SU) to a device (20) for an automotive system (1), for example to an electric control unit (20) for a vehicle (1), b) streaming (304) one or more artifacts (AF) of the software update (SU) to the device (20), c) checking (306) components (UMS, AF) associated with a software update (SU), for example for authenticity and/or integrity.
